# EUROPEAN PATENT APPLICATION

(11) **EP 4 729 156 A1**
(43) Date of publication of application: **22.04.2026**
(21) Application number: 24823685.3
(22) Date of filing: 12.06.2024
(51) Int. Cl.: B01D 59/10, C01B 32/05

(54) **CARBON ISOTOPE SEPARATION METHOD**

(30) Priority: 16.06.2023 KR 20230077577; 10.06.2024 KR 20240074856
(71) Applicant: Institute for Basic Science, Yuseong-gu Daejeon 34126 (KR); Ulsan National Institute of Science and Technology, Ulju-gun, Ulsan 44919 (KR)
(72) Inventor: RODNEY, Ruoff, Daejeon 34126 (KR); PAVEL, Bakharev, Daejeon 34126 (KR)
(74) Representative: Kraus & Lederer PartGmbB
(86) International application number: PCT/KR2024/008013
(87) International publication number: WO 2024/258167

(57) **Abstract**

The present invention relates to: a carbon isotope separation apparatus using an electron beam heating method; and a carbon isotope separation method using same. Specifically, a carbon isotope separation apparatus according to one aspect comprises: a high vacuum electron beam chamber: a magnetic metal cylinder provided in the high vacuum electron beam chamber and including a carbon mixture storage unit on the upper surface thereof; and a water-cooled sample holder in contact with the lower surface of the magnetic metal cylinder, and can efficiently separate and concentrate carbon isotopes.

## Description

### [Technical Field]

The present invention relates to a carbon isotope separation apparatus, and carbon isotope separation and concentration methods using the same.

### [Background Art]

An isotope separation technology is a technology of separating a specific isotope from an isotope mixture formed of the same elements having different atomic masses.

Meanwhile, carbon includes two types of stable isotopes of carbon-12 (¹²C) having a natural component ratio of 98.89% and carbon-13 (¹³C) having a natural component ratio of 1.1%, and since each isotope is a very useful material in various industrial fields, it is one of very important raw materials as an isotope separation and concentration subject. However, the technology which is currently used for carbon isotope separation requires expensive equipment and specialized skills or uses materials harmful to the environment and the human body, and has low separation efficiency.

### [Disclosure]

### [Technical Problem]

An object of the present invention is to provide a separation apparatus allowing efficient separation and concentration of carbon isotopes, and a carbon isotope separation method using the same.

### [Technical Solution]

In one general aspect, a carbon isotope separation apparatus includes: a high vacuum electron beam chamber; a magnetic metal cylinder which is provided in the high vacuum electron beam chamber and includes a carbon mixture storage unit on an upper surface thereof; and a water-cooled sample holder in contact with a lower surface of the magnetic metal cylinder.

The magnetic metal may be nickel or cobalt.

The sample holder may be a graphite precipitation unit.

A body unit of the magnetic metal cylinder may be a diffusion path of a carbon element.

In another general aspect, a carbon isotope separation method using the carbon isotope separation apparatus includes: adding a carbon mixture including ¹²C and ¹³C to a carbon mixture storage unit of a magnetic metal cylinder and performing a eutectic process by an electron beam heating method; and precipitating graphite through carbon element diffusion.

The magnetic metal cylinder may form a temperature gradient decreasing toward the lower surface in the carbon mixture storage unit.

A temperature of the carbon mixture storage unit may be 1300°C to 1400°C, and a temperature of the lower surface may be 600°C to 900°C.

A metal component in the magnetic metal cylinder may be selected to control the separated carbon isotope.

### [Advantageous Effects]

According to the carbon isotope separation method of the present invention, carbon isotopes may be separated in an economically and environmentally friendly manner and a relative existence ratio thereof may be controlled.

Specifically, since the carbon isotope separation method according to an embodiment does not use materials harmful to the human body and the environment, it is environmentally friendly, and, since its process is simple and has high energy efficiency, the method is expected to be advantageous for application in actual industrial sites.

### [Description of Drawings]

FIG. 1 is a drawing of a magnetic metal cylinder according to an exemplary embodiment.
FIG. 2 is a photograph of a lower surface of the magnetic metal cylinder before and after performing carbon element diffusion according to an exemplary embodiment.
FIG. 3 is a drawing of a magnetic metal cylinder according to an exemplary embodiment.
FIGS. 4 to 6 are Raman spectra of the upper surface and the lower surface of the magnetic metal cylinder after performing carbon element diffusion in Examples 1 to 3.

### [Best Mode]

In the present specification, unless otherwise defined, all technical terms and scientific terms have the same meanings as those commonly understood by a person skilled in the art to which the present invention pertains. The terms used herein are only for effectively describing a certain specific example and are not intended to limit the present invention.

The singular form used in the present specification may be intended to also include a plural form, unless otherwise indicated in the context.

Throughout the present specification, unless otherwise particularly stated, the word "comprise", "equipped", "contain", or "have" does not mean the exclusion of any other constituent element, but means further inclusion of other constituent elements, and elements, materials, or processes which are not further listed are not excluded.

The numerical range used in the present specification includes all values within the range including the lower limit and the upper limit, increments logically derived from the form and breadth of a defined range, all double limited values, and all possible combinations of the upper limits and the lower limits in the numerical range defined in different forms. Unless otherwise defined in the present specification, values which may be outside a numerical range due to experimental error or rounding from a value are also included in the defined numerical range.

Unless otherwise particularly defined in the present specification, "about" may be considered as a value within 30%, 25%, 20%, 15%, 10%, or 5% of a stated value.

Hereinafter, the present disclosure will be described in detail. However, it is only illustrative, and the present disclosure is not limited to the specific exemplary embodiment which is illustratively described.

An embodiment of the present invention provides an apparatus allowing separation and concentration of carbon isotopes using electron beam heating, and a carbon isotope separation method using the same.

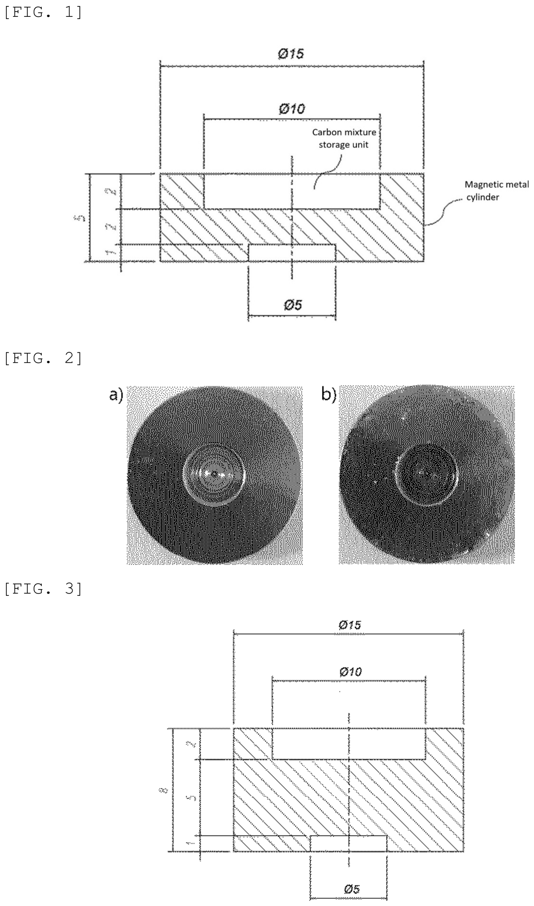

The carbon isotope separation apparatus according to an embodiment may include: a high vacuum electron beam chamber: a magnetic metal cylinder which is provided in the high vacuum electron beam chamber and includes a carbon mixture storage unit on an upper surface thereof (FIG. 1); and a water cooled sample holder in contact with a lower surface of the magnetic metal cylinder.

The magnetic metal may be used without limitation if it is a magnetic metal having high solubility in carbon, and as a non-limiting example, may be nickel, cobalt, or iron.

The body unit of the magnetic metal cylinder may be a diffusion path of a carbon element, and the water-cooled sample holder may be a graphite precipitation unit in which the carbon element which moves by diffusion is cooled and precipitated.

Another embodiment of the present invention provides a carbon isotope separation method using the carbon isotope separation apparatus described above.

The carbon isotope separation method according to an embodiment may include: adding a carbon mixture including ¹²C and ¹³C to a carbon mixture storage unit of a magnetic metal cylinder and forming a eutectic melt of the carbon mixture and the magnetic metal by an electron beam heating method; and precipitating graphite through carbon element diffusion.

The carbon isotope separation method according to an embodiment may further include annealing the magnetic metal cylinder before adding the carbon mixture, which facilitates diffusion of the carbon element.

The annealing may be performed, as an example, in a temperature range of 1300 to 1400°C for 40 to 60 hours under a hydrogen atmosphere.

According to the carbon isotope separation method according to an embodiment, a temperature gradient decreasing toward the lower surface in the carbon mixture storage unit of the magnetic metal cylinder may be formed by the electron beam heating, and the carbon element which moves by diffusion therefrom may be precipitated in the lower surface.

During the electron beam heating, the temperature of the carbon mixture storage unit may be 1,300°C to 1,400°C, 1,320°C to 1,400°C, or 1,320°C to 1,350°C, the temperature of the lower surface (water cooled sample holder, graphite precipitation unit) may be 600°C to 900°C, and the temperature may vary depending on the length of the magnetic metal cylinder.

The carbon isotope separation by the electron beam heating may be performed for 6 to 8 hours.

The metal component of the magnetic metal cylinder may be selected to control the separated carbon isotope, and as an example, in the magnetic metal cylinder of a nickel component, ¹²C diffuses more rapidly and is concentrated and precipitated in the lower surface, and in the magnetic metal cylinder of a cobalt component, ¹³C diffuses more rapidly and is concentrated and precipitated in the lower surface.

Hereinafter, the exemplary embodiments described above will be described in detail through the following examples. However, the following examples are only for illustration and do not limit the scope of a right.

### [Example 1]

A nickel metal bulk having a purity of 99.9 wt% (Shaanxi Super Metal Materials Co. Limited) was processed into a cylinder form as shown in FIG. 1, and the unit in FIG. 1 is mm. The magnetic metal cylinder formed of nickel was annealed at 1400°C for 60 hours under a hydrogen atmosphere.

Thereafter, a carbon mixture source in which ¹²C carbon powder (Alfa Aesar) and ¹³C carbon powder (Cambridge Isotope Laboratories Inc.) were mixed at a weight ratio of ¹²C/¹³C=1.4 was added to isopropanol and sonicated (Qsonica sonicator at ~300 W power) for 5 minutes to prepare a carbon mixture dispersion. The carbon mixture dispersion was added to a carbon mixture storage unit of the magnetic metal cylinder using a micropipette, and the solvent was dried.

The carbon mixture-magnetic metal cylinder system was installed in a high vacuum electron beam chamber, and the lower surface of the magnetic metal cylinder was brought into contact with a water-cooled sample holder. The internal pressure of the high vacuum electron beam chamber was 10⁻⁷ torr, the temperature of the carbon mixture was heated to 1330°C by an electron beam method to form a eutectic melt of the carbon mixture and the magnetic metal to induce diffusion of the carbon element in the magnetic metal cylinder, and after 6 hours, it was confirmed that graphite was precipitated on the lower surface of the magnetic metal cylinder(FIG. 2-(b)).

### [Example 2]

The process was performed in the same manner as in Example 1, except that the length of the magnetic metal cylinder was changed as shown in FIG. 3, and the isotope ratio of the carbon mixture (¹²C/¹³C) was changed from 1.4 to 1 by weight.

### [Example 3]

The process was performed in the same manner as in Example 1, except that a cobalt metal bulk having a purity of 99.95 wt% (Shaanxi Super Metal Materials Co. Limited) was used as the magnetic metal cylinder material instead of the nickel metal.

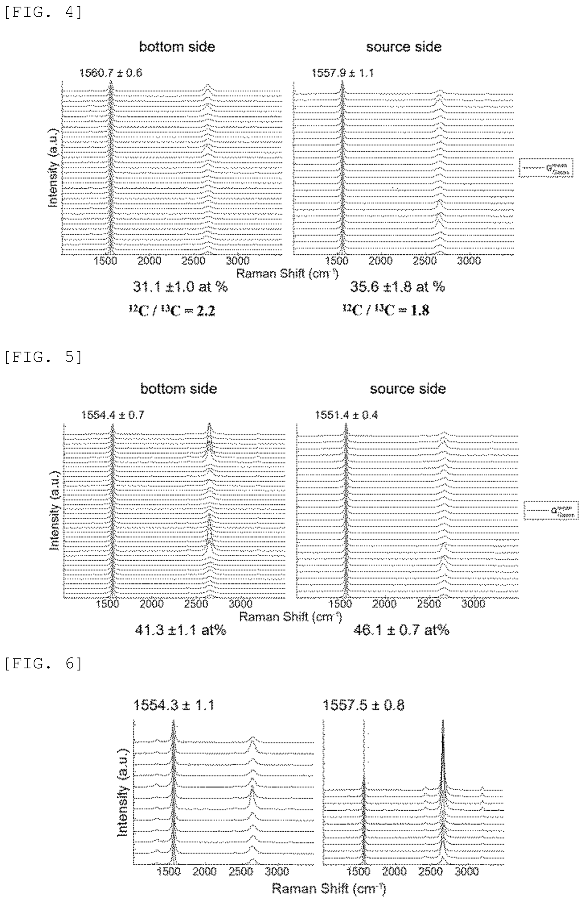

In the example, after the carbon element diffusion experiment, a ¹³C content (at%) was calculated from the results (FIGS. 4 to 6) of Raman spectra of the graphite precipitated in the carbon mixture storage unit (source side) and the water-cooled sample holder (bottom side) (N*ano Lett.* 2009, 9, 12, 4268-4272), and results are shown in the following Table 1. Herein, the Raman spectrum was performed in a mapping mode with a 532 nm laser source, x100 objective, ~1 mW laser output, 5 accumulations, and acquisition time for 10 seconds, using a confocal Raman spectroscope (WITec), and the resulting spectrum after Matlab software analysis is shown. The average position of the G peak indicated in the drawings was calculated according to the Gaussian function.

**[Table 1]**

| | Source side (¹³C, at%) | Bottom side (¹³C, at%) |
|---|---|---|
| Example 1 | 35.6 ±1.8 at % | 31.1 ±1.0 at % |
| Example 2 | 46.1 ±0.7 at % | 41.3 ±1.1 at % |
| Example 3 | 36.3 ±1.3 at % | 41.5 ±1.8 at % |

Referring to Table 1, in Examples 1 and 2 using the magnetic metal cylinder formed of nickel, it was found that graphite precipitated in the water-cooled sample holder (bottom side) may have a concentrated ¹²C content as compared with the graphite in the carbon mixture storage unit (source side). Thus, it was found therefrom that a relatively light element ¹²C diffused more rapidly through the nickel metal and was able to be precipitated in a concentrated content in the bottom side.

However, in Example 3 using the magnetic metal cylinder formed of cobalt, it was confirmed that the bottom side had a concentrated ¹³C content, and the opposite results to nickel are shown.

That is, the separated carbon isotope may be selected depending on the type of magnetic metal, and pure ¹³C and ¹²C are expected to be separated by performing the present experiment repeatedly.

Hereinabove, although the present invention has been described by specific exemplary embodiments, they have been provided only for assisting in the entire understanding of the present invention. Therefore, the present invention is not limited to the exemplary embodiments. Various modifications and changes may be made by those skilled in the art to which the present invention pertains from this description.

Therefore, the spirit of the present invention should not be limited to the above-described exemplary embodiments, and the following claims as well as all modifications equal or equivalent to the claims are intended to fall within the scope and spirit of the invention.

## Claims

1. A carbon isotope separation apparatus comprising:
a high vacuum electron beam chamber;
a magnetic metal cylinder which is provided in the high vacuum electron beam and includes a carbon mixture storage unit on an upper surface thereof; and
a water-cooled sample holder in contact with a lower surface of the magnetic metal cylinder.

2. The carbon isotope separation apparatus of claim 1, wherein the magnetic metal is nickel or cobalt.

3. The carbon isotope separation apparatus of claim 1, wherein the sample holder is a graphite precipitation unit.

4. The carbon isotope separation apparatus of claim 1, wherein a body unit of the magnetic metal cylinder is a diffusion path of a carbon element.

5. A carbon isotope separation method using the carbon isotope separation apparatus of any one of claims 1 to 4, the method comprising:
adding a carbon mixture including ¹²C and ¹³C to a carbon mixture storage unit of a magnetic metal cylinder and performing a eutectic process by an electron beam heating method; and precipitating graphite through carbon element diffusion.

6. The carbon isotope separation method of claim 5, wherein the magnetic metal cylinder forms a temperature gradient decreasing toward a lower surface in the carbon mixture storage unit.

7. The carbon isotope separation method of claim 6, wherein a temperature of the carbon mixture storage unit is 1300°C to 1400°C, and a temperature of the lower surface is 600°C to 900°C.

8. The carbon isotope separation method of claim 5, wherein a metal component in the magnetic metal cylinder is selected to control a separated carbon isotope.
